# EUROPÄISCHE PATENTSCHRIFT

(11) **EP 2 251 169 B1**
(45) Veröffentlichungstag und Bekanntmachung des Hinweises auf die Patenterteilung: **01.08.2018**
(21) Anmeldenummer: 10004843.8
(22) Anmeldetag: 07.05.2010
(51) Int. Cl.: B23Q 1/00, B27M 1/08, G05B 19/409

(54) **Kehlmaschine zum Bearbeiten von Werkstücken aus Holz, Kunststoff und dergleichen**
Moulder machine for machining workpieces made of wood, plastic and similar
Machine à moulurer pour le traitement de pièces usinées en bois, en matière synthétique et analogue

(30) Priorität: 11.05.2009 DE 102009021729
(43) Veröffentlichungstag der Anmeldung: 17.11.2010
(73) Patentinhaber: Michael Weinig Ag, 97941 Tauberbischofsheim (DE)
(72) Erfinder: Martin, Peter, 97941 Tauberbischofsheim (DE); Schäfer, Hermann, 97950 Grossrinderfeld (DE); Kurz, Rainer, 97999 Igersheim (DE); Schneider, Benedikt, 97941 Tauberbischofsheim (DE)
(74) Vertreter: Kohl, Karl-Heinz

(56) Entgegenhaltungen:
- EP-A1- 0 937 569
- EP-A1- 1 820 611
- WO-A1-01/71878
- WO-A1-2009/097895
- DE-A1-102005 062 385
- US-A1- 2007 028 730
- US-A1- 2007 102 063

## Beschreibung

Die Erfindung betrifft eine Kehlmaschine nach dem Oberbegriff des Anspruchs 1. Eine solche Kehlmaschine ist aus dem Dokument US20070028730 bekannt. Bei derartigen Kehlmaschinen, müssen die Maschinenelemente, wie beispielsweise die Bearbeitungsspindeln, Andrückelemente, Anschläge, Vorschub und dergleichen in Abhängigkeit von dem am durchlaufenden Werkstück herzustellenden Profil eingestellt werden. Diese Einstellung erfolgt je nach Maschinenelement von Hand direkt an dem Element oder automatisch, zum Beispiel durch eine motorisch positionierbare Achse. Hierzu befindet sich außerhalb der eigentlichen Maschine bzw. Maschinenabdeckung ein Bedienpanel, an dem Daten zur Einstellung der verschiedenen Maschinenelemente dargestellt werden und vom Maschinenbediener eingebbar sind und bestimmte Maschinenfunktionen gestartet und ein/ausgeschaltet werden. An diesem Bedienpanel werden zumindest ein Teil der in der Maschine vorhandenen Maschinenelemente und deren Einstellwerte angezeigt, anhand derer dann der Maschinenbediener seine Eingaben am Bedienpanel durchführt. Hierbei kommt es immer wieder vor, dass Maschinenelemente falsch eingestellt werden, insbesondere weil bei solchen Maschinen eine größere Zahl von Maschinenelementen eingestellt werden muss, um ein bestimmtes Profil an den durch die Maschine durchlaufenden Werkstücken zu erzeugen. Die Falscheinstellungen führen im einfachsten Fall dazu, dass die durch die Maschine transportierten und dabei bearbeiteten Werkstücke Abfall sind, da sie aufgrund der falsch eingestellten Maschinenelemente nicht das erforderliche Profil aufweisen. Im schlimmsten Fall werden Maschinenelemente aufgrund der falschen Einstellung beschädigt.

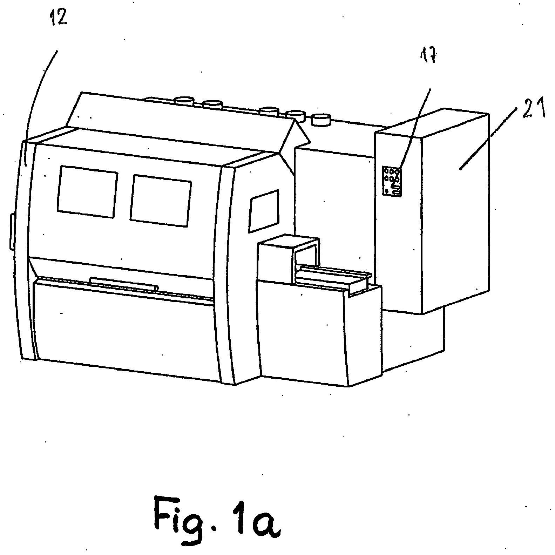

Fig. 1a zeigt eine bekannte Maschine in Form einer Standardkehlmaschine, die außerhalb ihrer Abdeckung 12 einen Schaltschrank 21 aufweist, an dem das Bedienpanel 17 mit Tastern und Schaltern vorhanden ist. Der Maschinenbediener nimmt an diesem Bedienpanel 17 einen Teil der erforderlichen Verstellungen der Maschinenelemente vor. Während der Arbeiten am Bedienpanel 17 sind die Maschinenelemente nicht sichtbar, so dass der Maschinenbediener auch nicht die Möglichkeit hat, während des Einstellvorganges die entsprechenden Maschinenelemente optisch zu überwachen bzw. zu prüfen. Gewisse Einstellungen sind direkt vor Ort an dem jeweiligen Element auszuführen oder zu kontrollieren, wodurch der örtliche Wechsel von Einstellelement zu Bedienpanel 17 aufwändig, umständlich und zeitintensiv ist.

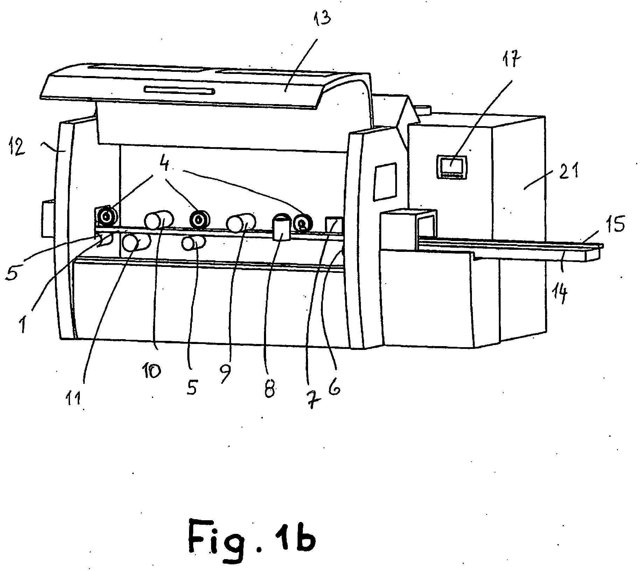

Fig. 1b zeigt eine weitere bekannte Maschine in Form einer Standardkehlmaschine, bei der das neben der Maschinenabdeckung 12 angeordnete Bedienpanel 17 einen Bildschirm aufweist. Das Bedienpanel 17 ist mit Tasten und Schaltern versehen, mit denen der Maschinenbediener die Bildschirmsteuerung bedienen, Maschinenfunktionen auslösen, z. B. Spindeln ein/ausschalten, und die Einstellungen an den Maschinenelementen vornehmen kann. Eine Klappe 13 der Maschine ist in geöffnetem Zustand dargestellt, so dass innerhalb der Maschinenabdeckung 12 befindliche, schematisch dargestellte Maschinenelemente erkennbar sind. Diese Maschinenelemente sind im dargestellten Ausführungsbeispiel eine horizontale Abrichtspindel 6, eine vertikale rechte Spindel 7, eine vertikale linke Spindel 8, eine obere horizontale Spindel 9, eine weitere obere horizontale Spindel 10 sowie eine weitere horizontale untere Spindel 11. Mit den auf diesen Spindeln sitzenden Werkzeugen wird das Werkstück 1, das mit Hilfe von Vorschub/Transportwalzen 4 durch die Maschine transportiert wird, in bekannter Weise bearbeitet. Mit der unteren Abrichtspindel 6 wird die Unterseite, mit der rechten vertikalen Spindel 7 die rechte Längsseite, mit der linken vertikalen Spindel 8 die linke Längsseite, mit den beiden oberen horizontalen Spindeln 9, 10 die Oberseite und mit der horizontalen unteren Spindel 11 die Unterseite des Werkstückes 1 bei seinem Durchlauf durch die Maschine bearbeitet. Die Maschine ist beispielsweise mit unteren Tischwalzen 5 versehen, auf denen das Werkstück 1 während seines Transports aufliegt und womit der Transport des Werkstückes durch die Maschine unterstützt wird.

All diese beschriebenen Maschinenelemente müssen so eingestellt werden, dass das Werkstück 1 das geforderte Profil aufweist und sauber, zuverlässig und schwingungsfrei durch die Maschine transportiert wird.

Darüber hinaus sind an solchen Maschinen noch weitere Maschinenelemente vorgesehen, die in Fig. 1b der Übersichtlichkeit wegen nicht dargestellt sind. Solche Maschinenelemente sind beispielsweise der Maschinentisch, Anschläge und Andruckelemente vor und hinter den jeweiligen Spindeln. Weitere Maschinenelemente sind beispielsweise der Abrichttisch 14, auf dem das Werkstück 1 aufliegend in die Maschine transportiert wird, und das Fügelineal 15, an dem das Werkstück beim Einlauf mit seiner rechten Längsseite anliegt.

Bei Kehlmaschinen müssen, um ein bestimmtes Werkstückprofil herstellen zu können, beispielsweise folgende Einstellelemente und Einstellfunktionen berücksichtigt werden:
- Axiale und radiale Verstellungen der Bearbeitungsspindeln
- Einstellungen der Andruckelemente vor und hinter den Bearbeitungsspindeln
- Einstellung der Höhe der Vorschubwalzen
- Einstellung der Vorschubgeschwindigkeit
- Einstellung der Anschläge auf der in Vorschubrichtung rechten Seite
- Einstellung des Fügelineals 15 zur Bestimmung der Spanabnahme an der rechten Seite des Werkstückes 1
- Höheneinstellung des Abrichttisches 14 zur Bestimmung der Spanabnahme an der unteren Seite des Werkstückes 1
- Einstellung der Spanabnahme an einer in den Ausführungsbeispielen nicht dargestellten zweiten rechten Spindel durch Verstellung des zugehörigen Anschlages
- Einstellung von seitlichen, gegen die linke Längsseite des Werkstückes 1 wirkenden Druckrollen oder Linealen
- Einstellung der Höhe eines Auslauftisches der Maschine, um die Spanabnahme an der horizontalen unteren Spindel 11 einzustellen
- Einstellung des Andrucks bzw. der Abführung über der unteren horizontalen Spindel 11
- Einstellung der Tischplatten relativ zum Flugkreis der auf den jeweiligen Spindeln sitzenden Werkzeuge
- Einstellung des Druckes bei pneumatischen Andruckelementen
- Bestückung mit der notwendigen Zahl an Transportwalzen und Einstellung deren axialer Anordnung
- Bestückung mit den erforderlichen Werkzeugen, dazu ggf. Lösen der Werkzeugspannung

Diese Auflistung der möglichen Einstellungen an den Maschinenelementen zeigt, dass der Maschinenbediener eine große Zahl von Maschinenelementen beim Einstellen/Umrüsten der Maschine auf ein neues Profil zu berücksichtigen hat, so dass die Gefahr von Fehl- bzw. Falscheinstellungen hoch ist.

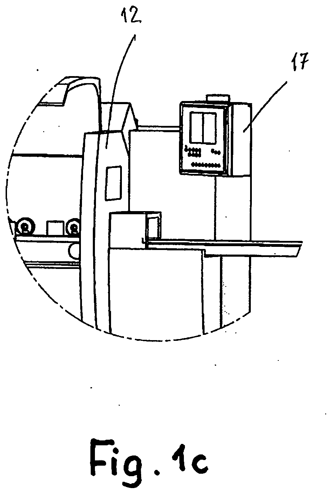

Fig. 1c zeigt einen Ausschnitt einer weiteren bekannten Maschine, bei der sich außerhalb der Maschinenabdeckung 12 ein schwenkbares bzw. bewegbares Bedienpult 17 befindet, das mit einem Bildschirm sowie mit einer PC-Steuerung versehen ist. Das Bedienpult 17 hat Taster und Schalter, mit denen der Maschinenbediener Einstellungen an den Maschinenelementen vornehmen kann.

Es ist eine Maschine zum Bearbeiten von Werkstücken aus Holz, Kunststoff und dgl. bekannt (US 2007/0028730 A1), bei der die Maschine eine Säge und einen Bohrer hat. Das zu bearbeitende Werkstück wird mit Hilfe eines Schiebers längs einer Verschiebeposition entweder zur Säge oder zum Bohrer verschoben. Zur Steuerung des Schiebers ist ein Einstellpanel vorgesehen, das wahlweise im Bereich der Säge oder im Bereich des Bohrers angeordnet wird, je nach dem, ob das Werkstück gesägt oder gebohrt werden soll.

Der Erfindung liegt die Aufgabe zugrunde, die gattungsgemäße Maschine so auszubilden, dass der Maschinenbediener an den Maschinenelementen vorzunehmende Einstellungen einfach und dennoch zuverlässig vornehmen kann.

Diese Aufgabe wird bei der gattungsgemäßen Maschine erfindungsgemäß mit den kennzeichnenden Merkmalen des Anspruches 1. Bei der erfindungsgemäßen Maschine wird das Einstellpanel an verschiedenen Stellen in der Maschine mittels der Positionserkennungseinrichtung positioniert. Dieses Panel zeigt in Abhängigkeit von seiner jeweiligen Position die Positionseinstelldaten der(des) dieser Position zugeordneten Maschinenelemente(s) an. Da sich das Einstellpanel an der Position befindet, a n der sich auch das einzustellende Maschinenelement befindet, kann der Maschinenbediener vom Ort der Einstellung die Positionseinstellwerte auf dem Einstellpanel unmittelbar sehen sowie bei seiner Einstellung sofort optisch überprüfen, ob das von ihm eingestellte Maschinenelement die gewünschte Position einnimmt. Insbesondere aber zeigt das Einstellpanel nicht mehr die Einstellwerte aller Maschinenelemente, sondern nur diejenigen Positionseinstellwerte an, die für die an der Position notwendigen Maschinenelemente erforderlich sind. Befindet sich das Einstellpanel beispielsweise im Bereich einer rechten vertikalen Spindel, dann werden mit dem Einstellpanel nur die Positionseinstellwerte für diese Spindel angezeigt. Dadurch ist sichergestellt, dass sich der Maschinenbediener nur auf diejenigen Einstellungen konzentriert, die für diese beispielhaft genannte vertikale rechte Spindel notwendig sind. Nach dem Einstellvorgang wird das Einstellpanel zur nächsten Position gebracht, an der dann nur diejenigen Positionseinstellwerte angezeigt werden, die für die an der neuen Position befindlichen Maschinenelemente erforderlich sind. Auf diese Weise wird das Einstellpanel an die Position der zu verstellenden Maschinenelemente gebracht und automatisch nur diejenigen Positionseinstellwerte derjenigen Maschinenelemente angezeigt, die dieser jeweiligen Position des Einstellpanels zugeordnet sind.

Unter Einstellpanel ist jede Art von bekannten Steuer-, Anzeige- oder Bediengeräten, ein Pult, Tableau oder dergleichen zu verstehen.

Das Einstellpanel ist vorteilhaft in Transportrichtung der Werkstücke verfahrbar. Dadurch lässt sich das Einstellpanel sehr einfach an den unterschiedlichen Stellen positionieren.

Vorteilhaft ist das Einstellpanel portabel. Es lässt sich an den entsprechenden Stellen beispielsweise dadurch positionieren, dass es an den jeweiligen Positionen einhängbar ist.

Bei einer anderen Ausführungsform kann das portable Einstellpanel in Schnittstellen, die sich an den entsprechenden Positionen der Maschinenelemente befinden, eingesteckt werden.

Das Einstellpanel kann auch drahtlos mit an den entsprechenden Positionen der Maschinenelemente befindlichen Schnittstellen kommunizieren.

Vorteilhaft ist das Einstellpanel mit einem Bildschirm, vorzugsweise einem Touchscreen, versehen. Auf dem Bildschirm können die Einstellelemente, die vorzunehmenden Einstellvorgänge und die Positionseinstelldaten, wie zum Beispiel die Soll- und Istpositionswerte der entsprechenden Verstellachsen der Einstellelemente, deutlich dargestellt werden. Insbesondere ist es aber möglich, auf dem Bildschirm ein Abbild des gerade einzustellenden Maschinenelementes zu liefern. Da der Maschinenbediener am Bildschirm genau die Situation sieht, die er auch an der Maschine vorfindet, ist für ihn die Einstellung des Maschinenelementes besonders einfach und zuverlässig möglich. Eine korrekte Einstellung kann über einen Soll-Istwert-Vergleich optisch deutlich sichtbar dargestellt werden.

Zur Positionserkennung können Sensoren, wie induktive Näherungsschalter, vorgesehen sein, die sich an den Positionen der möglichen zu verstellenden Maschinenelemente befinden. Beim Verfahren des Einstellpanels werden nur diejenigen Sensoren betätigt, die sich im Bereich der einzustellenden Maschinenelemente befinden.

Zur Positionserkennung bzw. Positionierung des Einstellpanels können auch mechanische Endschalter und Schaltnocken oder auch lineare Wegmesssysteme, wie beispielsweise Linearmagnetmaßstäbe, eingesetzt werden. Die Positionserkennung kann auch über berührungslos arbeitende Sensoren oder RFID mit Transponder erfolgen.

Das Einstellpanel ist vorteilhaft innerhalb der Maschinenabdeckung verfahrbar. Es befindet sich dann in unmittelbarer Nähe der einzustellenden Maschinenelemente, wodurch der Einstellvorgang für den Maschinenbediener erleichtert wird.

Es ist möglich, das Einstellpanel durch eine Öffnung der Maschinenabdeckung nach außen zu verfahren. Eine solche Ausbildung ist dann vorteilhaft, wenn die komplette Maschinensteuerung über das Einstellpanel vorgenommen wird. Dann kann das Einstellpanel durch die Öffnung nach außen verfahren werden, um z. B. mit ihm außerhalb der Maschine die allgemeine Datenverwaltung vorzunehmen.

Vorteilhaft ist es, wenn das Einstellpanel mit wenigstens einer Kamera, wie einer Web-Cam, versehen ist bzw. wenigstens einen Anschluss für eine solche Kamera aufweist. Mit einer solchen Kamera kann beispielsweise der erstmalige Einstellvorgang für ein Werkstückprofil aufgenommen und als Film oder Bilder gespeichert werden. Ist dann bei späterem Einsatz der erfindungsgemäßen Maschine wieder ein solches Werkstückprofil einzustellen, dann kann auf dem Einstellpanel der mit der Kamera aufgenommene Film als Einstellhilfe abgespielt oder die Bilder angezeigt werden. Nach dem Einstellvorgang könnte das Einstellpanel mit der Kamera in eine definierte Position verstellt werden, von wo aus mit der Kamera eine Innenraumüberwachung der Maschine während der Produktion, das heißt bei der Werkstückbearbeitung im Automatikbetrieb, durchgeführt werden könnte.

Das Einstellpanel ist vorteilhaft an eine Maschinensteuerung angeschlossen, über die das Einstellpanel die anzuzeigenden Einstellwerte erhält.

Vorteilhaft ist es, wenn das Einstellpanel mit zumindest einem Teil der Maschinenelemente, vorteilhaft mit allen Maschinenelementen, signalverbunden ist. Dann kann die Einstellung dieser Maschinenelemente direkt vom Einstellpanel aus erfolgen oder zumindest deren Ist-Position angezeigt werden.

Es ist auch möglich, dass das Einstellpanel mit Einstellelementen versehen ist, mit denen die jeweiligen Maschinenelemente nach Maßgabe der angezeigten Positionseinstellwerte eingestellt werden. Damit ist eine einheitliche Anordnung der Bedienelemente, deren gute Zugänglichkeit von jedem Platz aus und eine ergonomisch vorteilhafte Bedienung gegeben.

Bei einer anderen erfindungsgemäßen Ausbildung ist das Einstellpanel anhand der über eine Maschinensteuerung ermittelten erforderlichen Verstellungen, z.B. beim Einstellen der Maschine auf ein bestimmtes Werkstückprofil bzw. für eine bestimmte Anwendung, selbsttätig und automatisch positionierbar. Dadurch wird das Einstellpanel über die Maschinensteuerung in die jeweiligen Positionen verstellt.

Bei einer vorteilhaften Ausbildung besteht auch die Möglichkeit, das Einstellpanel auf eine positionsunabhängige Anzeige von Positionseinstelldaten umzuschalten. Diese Einstelldaten sind vorzugsweise solche Daten, die von jeder Position aus wichtig und einstellbar sind, beispielsweise um den Vorschub der Maschine an jeder Position, an der sich das Einstellpanel gerade befindet, einzustellen.

Weitere Merkmale der Erfindung ergeben sich aus den weiteren Ansprüchen, der Beschreibung und den Zeichnungen.

Die Erfindung wird nachstehend anhand einiger in den Zeichnungen dargestellter Ausführungsformen näher erläutert. Es zeigen
- Fig. 1a bis Fig. 1c: jeweils unterschiedliche Ausführungsformen von Maschinen zur Bearbeitung von Werkstücken aus Holz, Kunststoff und dergleichen nach dem Stand der Technik,
- Fig. 2 und Fig. 3: jeweils verschiedene Ausführungsformen von erfindungsgemäßen Maschinen zur Bearbeitung von Werkstücken aus Holz, Kunststoff und dergleichen,
- Fig. 4 und Fig. 5: Beispiele für Anzeigen auf dem Bildschirm der erfindungsgemäßen Maschine.

Im Folgenden wird die Erfindung anhand einer Kehlmaschine im Einzelnen erläutert. Die Erfindung ist allerdings auf eine Kehlmaschine nicht beschränkt, sondern kann bei allen Maschinen bzw. Anlagen eingesetzt werden, bei denen Maschinenelemente eingestellt werden.

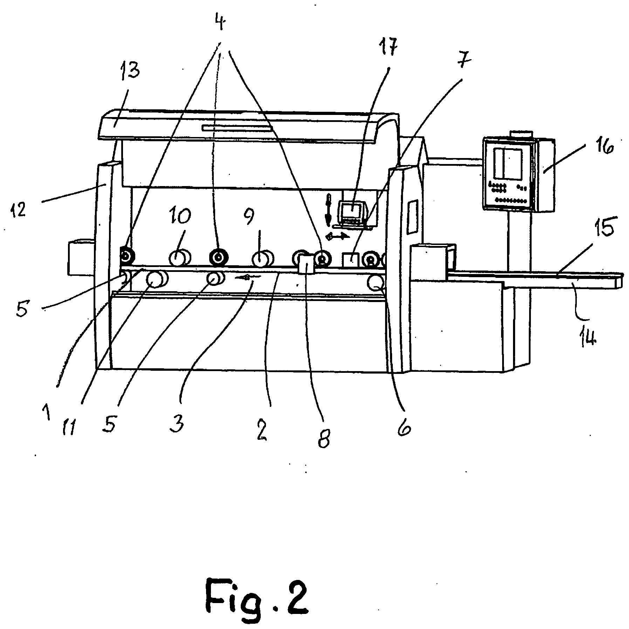

Die Maschine gemäß Fig. 2 ist eine Kehlmaschine, auf der die Werkstücke 1 in bekannter Weise bearbeitet werden. Die Werkstücke 1 werden auf einer schematisch dargestellten Transportbahn 2 durch die Maschine transportiert. In Transportrichtung 3 sind die die Werkstücke 1 bearbeitenden Werkzeuge hintereinander angeordnet. Zum Transport der Werkstücke 1 ist die Maschine mit Vorschub/Transportwalzen 4 versehen, die in bekannter Weise um horizontale Achsen drehbar angetrieben sind und auf dem Werkstück 1 aufliegen. Unterhalb des Werkstückes 1 befinden sich in Öffnungen oder Lücken der Transportbahn 2 um horizontale Achsen frei drehbare Tischwalzen 5, auf denen das Werkstück 1 ebenfalls aufliegt.

Das Werkstück 1 wird zunächst durch ein auf einer Abrichtspindel 6 sitzendes Abrichtwerkzeug an der Unterseite bearbeitet. Die Abrichtspindel 6 ist um eine horizontale Achse drehbar angetrieben. In Transportrichtung 3 hinter der Abrichtspindel 6 ist eine vertikale Spindel 7 vorgesehen, die drehbar angetrieben ist. Das auf ihr sitzende Werkzeug bearbeitet beim Durchlauf des Werkstückes 1 durch die Maschine die rechte Längsseite des Werkstückes 1. Der rechten Spindel 7 mit Abstand nachgeordnet ist eine linke Spindel 8 vorgesehen, die ebenfalls um eine vertikale Achse drehbar angetrieben ist. Das auf ihr sitzende Werkzeug bearbeitet beim Durchlauf des Werkstückes 1 dessen linke Längsseite.

In Transportrichtung 3 mit Abstand hinter der linken Spindel 8 ist die Maschine mit einer oberen horizontalen Spindel 9 versehen. Mit dem auf ihr sitzenden Werkzeug wird die Oberseite des Werkstückes 1 bei dessen Durchlauf bearbeitet.

Der oberen Spindel 9 mit Abstand nachgeschaltet ist eine zweite obere Spindel 10, die um eine horizontale Achse drehbar angetrieben ist und deren Werkzeug das Werkstück ebenfalls an dessen Oberseite beim Maschinendurchlauf bearbeitet. In Transportrichtung 3 hinter der oberen Spindel 10 befindet sich eine untere horizontale Spindel 11, deren Werkzeug das Werkstück 1 an dessen Unterseite beim Durchlauf bearbeitet.

Die Maschine ist mit einer integrierten Maschinenabdeckung 12 ausgestattet, welche im vorderen, oberen Bereich eine Klappe 13 aufweist, welche im geöffneten Zustand den Zugriff auf die beschriebenen Werkzeuge, auf die Einstellelemente und das Bedienpanel zulässt.

Aus der Maschinenabdeckung 12 ragt ein Abrichttisch 14, auf dem die Werkstücke 1 in die Maschine gefördert werden. Seitlich oberhalb des Abrichttisches 14 ist die Maschine mit einem Fügelineal 15 versehen, an dem das Werkstück 1 mit seiner in Transportrichtung 3 rechten Längsseite anliegt. In Verlängerung des Fügelineals 15 erstrecken sich nicht dargestellte Anschläge durch die Maschine, so dass das Werkstück 1 bei seinem Durchlauf einwandfrei geführt ist.

Neben der Maschinenabdeckung 12 ist eine Zentral/Leitsteuerung 16 vorgesehen, die die allgemeine Maschinensteuerung und Datenverwaltung für die Werkzeuge und die am Werkstück 1 zu erzeugenden Profile und dergleichen übernimmt. Diese Steuerung 16 kann stationär oder verstellbar, insbesondere schwenkbar, vorgesehen sein. Sie kann aber auch als freistehendes und auf Rollen verfahrbares Pult neben der Maschinenabdeckung angeordnet sein.

Innerhalb der Maschinenabdeckung 12 befindet sich ein Einstell/Bedienpanel 17, mit dem der Bediener der Maschine Einstellvorgänge und dergleichen an der Maschine vornehmen kann, wie einleitend zum Stand der Technik erläutert worden ist. So müssen in der Maschine die Spindeln 6 bis 11 axial bzw. radial verstellt werden, um die Spindeln auf unterschiedliche Werkstücke 1 bzw. unterschiedliche herzustellende Profile einzustellen. Vor und/oder hinter den Bearbeitungsspindeln befinden sich in der Regel Andruckelemente, die auf dem Werkstück 1 aufliegen und es in Richtung auf die Transportbahn 2 oder die Anschläge belasten. Dadurch ist eine präzise Bearbeitung des Werkstückes 1 durch die auf den Spindeln sitzenden Werkzeuge gewährleistet. Je nach Dicke bzw. Breite der Werkstücke 1 und dem Flugkreisdurchmesser der Werkzeuge müssen die Andruckelemente mit Hilfe des Einstell/Bedienpanels eingestellt werden. Auch die Vorschubwalzen 4 müssen an die Dicke der Werkstücke 1 angepasst werden, was ebenfalls mit Hilfe des Panels 17 vorgenommen wird. Auch müssen in der Maschine vorgesehene Anschläge, die auf der in Transportrichtung 3 rechten Seite vorgesehen sind, entsprechend den Werkstücken 1 und dem Werkzeugflugkreisdurchmesser des rechten Werkzeuges 7 eingestellt werden. Das Fügelineal 15 muss ebenfalls eingestellt werden, um das Maß der Spanabnahme an der rechten Längsseite des Werkstückes 1 zu bestimmen. Ebenso kann die Lage des Abrichttisches 14 eingestellt werden, um die Spanabnahme an der Unterseite des Werkstückes 1 festzulegen. Weitere Einstellmöglichkeiten, die der Bediener mit Hilfe des Panels 17 vornehmen kann, sind beispielsweise die Einstellung der Höhe des Drucks für pneumatisch betätigbare Andruckelemente, für die Einstellung von Tischplatten zum Werkzeugflugkreis, für das Lösen der Werkzeugspannung und dergleichen.

Das Bedienpanel 17 ist innerhalb der Maschinenabdeckung 12 angeordnet und zumindest in Transportrichtung 3 des Werkstückes 1 verfahrbar (Fig. 2). Bei Bedarf kann das Bedienpanel 17 auch in Höhenrichtung verstellbar sein. Auch eine horizontale Verstellung quer zur Transportrichtung 3 ist möglich. Gegebenenfalls ist es sogar möglich, das Bedienpanel 17 um eine vertikale oder eine horizontale Achse schwenkbar vorzusehen, damit es vom Maschinenbediener jederzeit gut einsehbar und zugänglich ist.

Das Bedienpanel 17 ist über die Maschinenlänge verfahrbar und zeigt je nach Position innerhalb der Maschinenlänge automatisch diejenige Einstellmaske mit den für diese Position notwendigen Einstellelementen, Einstellwerten, Einstellvorgängen und dergleichen an. Der Maschinenbediener sieht somit auf dem Bildschirm des Bedienpanels 17 nur diejenigen Daten und Elemente, die er für die augenblickliche Einstellung benötigt. Auf diese Weise werden Fehleinstellungen durch den Maschinenbediener zuverlässig vermieden. Der Maschinenbediener wird nur mit den notwendigen Informationen versorgt, so dass er sicher und fehlerfrei die Maschine einstellen kann.

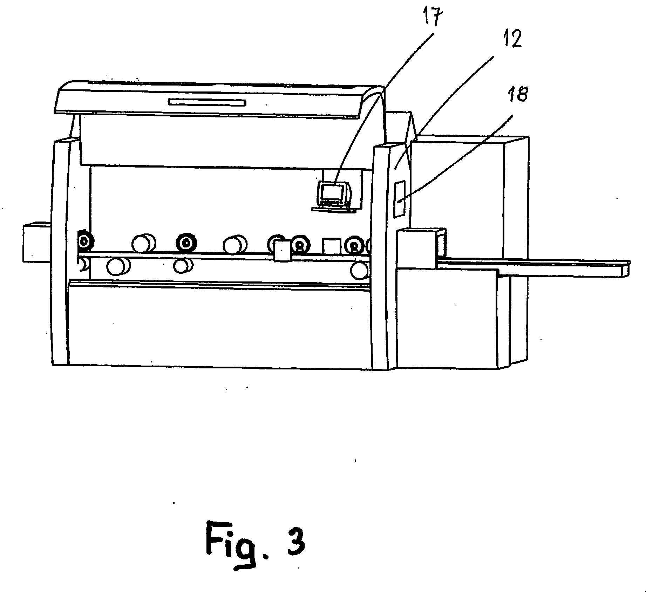

Bei der Ausführungsform gemäß Fig. 3 kann das Einstell/Bedienpanel 17 aus der Maschinenabdeckung 12 durch eine Öffnung im Bereich des Fensters 18 seitlich herausgefahren werden. In der aus der Maschinenabdeckung herausgefahrenen Stellung kann dann dieses Panel 17 auch als Leitrechner zur allgemeinen Maschinensteuerung und Datenverwaltung fungieren.

Die Verstellung des Einstell/Bedienpanels 17 erfolgt über (nicht dargestellte) bekannte Maschinenelemente, wie zum Beispiel eine Linearführung mit Laufschiene und Laufwagen. Um die Lage des Panels 17 in Bezug auf das einzustellende Maschinenelement zuverlässig zu erkennen, können zur Positionserkennung Sensoren eingesetzt werden, wie induktive Näherungsschalter. Es ist aber auch möglich, für die Positionserkennung mechanische Endschalter und Schaltnocken oder lineare Wegmesssysteme, wie Linearmagnetmaßstäbe, einzusetzen. Auch RFID mit Transponder sind möglich. Es ist ebenso möglich, die Position des Bedienpanels 17 in Bezug auf das jeweils einzustellende Maschinenelement motorisch mit Hilfe von Drehgebern anzufahren.

Die Verstellungen der einzelnen Maschinenelemente können automatisch über positionierbare, motorische Achsen erfolgen. Ebenso ist es möglich, eine motorische Verstellung durch Betätigung eines Schalters, eines Hebels und dergleichen vorzunehmen. Auch ist eine mechanische Handverstellung der Maschinenelemente mit Unterstützung von Maßstäben, Skalen und dergleichen möglich. Die vorzunehmenden Einstellwerte werden am Bedienpanel 17 als Sollwerte angezeigt. Wo die Verstellachsen der Einstellelemente mit Positionssensoren oder Positionsaufnehmern versehen sind, werden vorteilhaft auch die Istwerte angezeigt.

Vorteilhaft ist auch eine graphische Darstellung der jeweiligen einzustellenden Maschinenelemente und ggf. derer unmittelbarer Umgebung auf dem Bildschirm des Bedienpanels 17 möglich. Es ist auch möglich, den Einstellvorgang selbst in Form einer Animation auf dem Bildschirm des Bedienpanels 17 anzuzeigen.

Bei der Ausbildung des Maschinenelementes mit positionierbarer motorischer Achse kann mit Hilfe des Bedienpanels 17 das jeweilige Maschinenelement vollautomatisch in die gewünschte Einstellposition gebracht werden.

Da das Bedienpanel 17 bei seiner Längsverstellung innerhalb der Maschine an derjenigen Stelle positioniert wird, an der sich das bzw. die einzustellenden Maschinenelemente befinden, ist für die Bedienperson die jeweilige Verstellung leicht überwachbar und überprüfbar und damit eine zuverlässige Einstellung des jeweiligen Einstellelementes sichergestellt.

Bei der Ausführungsform gemäß Fig. 2 erfolgt die Aufteilung der Maschinensteuerung in den Zentral/Leitrechner 16 und das Einstell/Bedienpanel 17. In Abhängigkeit von der Bauform der Maschine und der Ausgestaltung der Abdeckung 12 bzw. der Klappe 13 kann dieses Bedienpanel 17 immer komplett innerhalb oder komplett außerhalb der Maschinenabdeckung 12 verfahrbar sein. Übliche Standardmaschinen verfügen über eine integrierte Abdeckung 12, und die Einstellung der Maschine erfolgt bei geöffneter Klappe 13. Hier sind beide Ausführungen, innerhalb und außerhalb der Maschinenabdeckung 12 angeordnetes Bedienpanel 17, vorstellbar. Es sind aber auch Maschinenausführungen vorgesehen, bei denen der Innenraum der Maschinenabdeckung 12 für die Einstellung ganz oder teilweise begehbar und beispielsweise durch Schiebetüren zugänglich ist. In diesem Falle befindet sich das Einstell/Bedienpanel 17 vollständig innerhalb der Abdeckung und ist auch innerhalb der Abdeckung verfahrbar bzw. positionierbar.

Sobald das Panel 17 in die Position des zu verstellenden Maschinenelementes gelangt, erscheinen die erforderlichen Einstellwerte für dieses Maschinenelement auf dem Bildschirm.

Der Bildschirm kann vorteilhaft als Touchscreen ausgebildet sein, über welchen ohne Zuhilfenahme einer Tastatur direkt Maschinenbedienungen und Einstellungen vorgenommen werden können.

Es sind aber auch andere Schalter und Taster am Panel 17 vorstellbar, mit denen sich Einstellvorgänge und Funktionen ausführen lassen. Im Prinzip ist die gesamte Maschinenbedienung über dieses Einstell/Bedienpanel 17 möglich.

An einzelnen Maschinenelementen können Standardbedieneinrichtungen vorgesehen sein, die beispielsweise aus einer Anzeige und/oder einem Schalter für eine motorische Verstellung bestehen und mit denen die entsprechenden Maschinenelemente eingestellt werden können. Diese zusätzlichen Bedieneinrichtungen an den Maschinenelementen selbst können so ausgebildet sein, dass nur mit ihnen die Einstellung dieses Maschinenelementes möglich ist, oder dass sie ergänzend oder parallel zum Einstell/Bedienpanel 17 eingesetzt werden können.

Bei einer vorteilhaften Weiterbildung können am Bildschirm des Einstell/ Bedienpanels 17 auch Zustandsmeldungen und/oder Fehlermeldungen entweder für die gesamte Maschine oder für einzelne Maschinenelemente angezeigt werden.

Häufig müssen bei einer Umstellung auf ein anderes Werkstückprofil nicht alle Maschinenelemente eingestellt werden, sondern können in der bisherigen Position verbleiben. Bei einer Weiterbildung werden über die Maschinensteuerung beim Einstellen eines neuen, am Werkstück 1 herzustellenden Profils die dafür notwendigen einzustellenden Maschinenelemente ermittelt. Dann wird das Einstell/Bedienpanel 17 selbsttätig und automatisch in diejenigen Positionen verfahren, in denen an den Maschinenelementen die ermittelten Verstellungen bzw. Einstellungen vorgenommen werden müssen. Diese werden dann am Panel 17 angezeigt. Die Positionierung des Einstell/Bedienpanels 17 erfolgt zum Beispiel über bekannte motorische Positionierantriebe mit Drehgeber. Sobald die Einstellungen an dem jeweiligen Maschinenelement vorgenommen sind, wird automatisch die nächste Position am nächsten einzustellenden Maschinenelement angefahren. Der Maschinenbediener wird somit beim gesamten Einstellprozess computerunterstützt bzw. computergesteuert geführt, wodurch die Fehlerhäufigkeit beim Einstellen der Maschinenelemente auf ein neues herzustellendes Werkstückprofil wesentlich verringert wird. Außerdem wird dadurch auch ein zeitlich optimierter Einstellprozess erreicht. Diese Vorgehensweise kann auch bei der Ausführung, bei der das Einstell/Bedienpanel 17 von Hand in die jeweilige Einstellposition verstellt wird, genutzt werden. Dabei können die den Maschinenelementen zugeordneten Sensoren dazu genutzt werden, dass der Maschinenbediener erkennt, welche Positionen überfahren werden können, und wo er seine Einstellungen vornehmen muss, um das Einstell/Bedienpanel 17 in diese Positionen zu verstellen.

Es ist weiter möglich, dass das Einstell/Bedienpanel 17 mit mindestens einer Web-Kamera versehen ist bzw. einen Anschluss für eine solche Web-Kamera aufweist. Mit ihr kann beispielsweise der erstmalige Einstellvorgang für ein herzustellendes Werkstückprofil aufgenommen und als Film oder Bilder gespeichert werden. Beim erneuten Einstellen dieses Werkstückprofiles kann dann dieser Film auf dem Bildschirm des Einstell/Bedienpanels 17 abgespielt oder die Bilder angezeigt werden.

Sind die Einstellvorgänge abgeschlossen, könnte bei einer solchen Ausbildung das Einstell/Bedienpanel 17 mit der Web-Kamera in eine definierte Position verstellt werden, von der aus mit der Kamera eine Innenraumüberwachung bei der Produktion, das heißt bei der Werkstückbearbeitung, im Automatikbetrieb durchgeführt werden kann.

Je nach Ausbildung der Maschine bietet es sich an, das Einstell/Bedienpanel 17 während der Werkstückbearbeitung in eine definierte Ruheposition zu verstellen, damit weder die Werkstückbearbeitung im Automatikbetrieb beeinträchtigt noch das Panel 17 einer mechanischen Beschädigung bzw. einer übermäßigen Verschmutzung ausgesetzt ist.

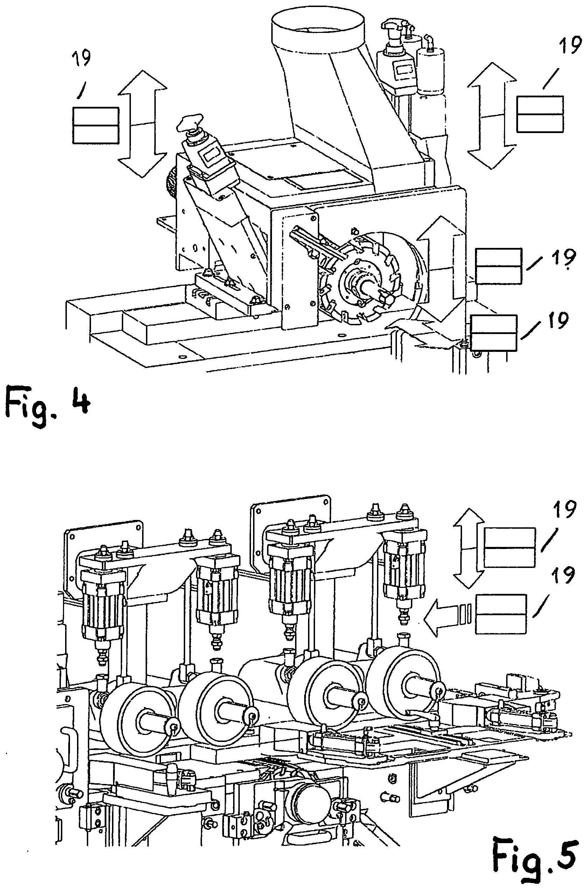

Die Fig. 4 und 5 zeigen beispielhaft auf dem Bildschirm des Panels 17 dargestellte Bilder von denjenigen Maschinenelementen, die eingestellt werden müssen. Diese optische Darstellung ist für den Maschinenbediener besonders anschaulich, da er auf dem Bildschirm genau angezeigt bekommt, welche Maschinenelemente wie einzustellen sind.

So können beispielhaft auf dem Bildschirm Soll/Ist-Werte angezeigt werden, wofür, wie die Fig. 4 und 5 zeigen, entsprechende Anzeigefelder 19 vorgesehen sind. So kann beispielsweise in der oberen Hälfte des Anzeigenfeldes 19 der Soll-Wert und in der unteren Hälfte des Anzeigefensters 19 der Ist-Wert angegeben werden. Anhand dieser beiden Werte kann der Maschinenbediener sehr einfach den Soll-Wert einstellen, da er anhand des Anzeigefeldes 19 sofort überprüfen kann, ob der eingestellte Ist-Wert dem Soll-Wert entspricht. Darüber hinaus ist auch eine farbige Darstellung und Zuordnung von dem einzustellenden Maschinenelement, von der Verstellachse sowie von Verstellpfeilen möglich, so dass durch diese optische Unterstützung die Einstellung der entsprechenden Maschinenelemente vom Maschinenbediener problemlos vorgenommen werden kann.

Ebenso ist es möglich, auf dem Bildschirm diejenigen Maschinenelemente bzw. Einstellelemente, die verstellt werden müssen, optisch zu kennzeichnen, beispielsweise durch Einsatz bestimmter Farben, blinkender Darstellung dieser Maschinenelemente und dergleichen. Mit Hilfe des Bildschirmes ist es darüber hinaus auch möglich, dem Maschinenbediener anzuzeigen, wie das jeweilige Maschinenelement verstellt werden muss.

Bei einer weiteren vorteilhaften Ausbildung besteht die Möglichkeit, dass der Bildschirm an jeder Position des Panels 17 so umgeschaltet werden kann, dass er beispielsweise einen Gesamtüberblick über die Maschinenelemente zeigt, die an der Maschine verstellbar sind. Eine solche im Prinzip positionsübergreifende Bilddarstellung ist auch dann sinnvoll, wenn Maschinenelemente, Einstell- oder auch Maschinenfunktionen von jeder Position des Panels 17 aus eingestellt oder ausgelöst bzw. gestartet werden sollen. Dies ist, wie in Fig 5 dargestellt, beispielsweise für das Einstellen der Vorschubbalkenhöhe, das Einstellen der Vorschubgeschwindigkeit oder das abschnittsweise Durchfahren/Durchtippen des Werkstückes 1 von Vorteil. Es ist auch möglich, Funktionen über Taster oder Schalter in jeder Position des Panels 17 zu aktivieren.

Die dargestellten Ausführungen der Maschinen sind nur als Beispiele zu verstehen. Entscheidend ist, dass an dem Einstell/Bedienpanel 17 positionsbezogen diejenige Einstellmaske mit den dieser Position zugeordneten Maschinenelementen und Einstelldaten dargestellt wird, oder dass das Einstell/Bedienpanel 17 an diejenige Position verfahren wird, an der Einstellungen am jeweiligen Maschinenelement vorgenommen werden müssen. Die vorzunehmenden Einstellungen werden dann auf dem Bildschirm dieses Panels 17 angegeben.

Im dargestellten und beschriebenen Ausführungsbeispiel wird das Panel 17 in Transportrichtung 3 der Werkstücke 1 verfahren. Das Panel 17 kann jedoch auch auf andere Weise in die jeweilige Position gebracht werden. So kann auch ein portables Panel 17 eingesetzt werden, das beispielsweise an der Position des jeweils einzustellenden Maschinenelementes eingehängt wird. Auch auf diese Weise lässt sich das Panel 17 in der erforderlichen Lage positionieren.

Es ist weiter möglich, das Panel 17 als tragbares Gerät zu verwenden, das der Maschinenbediener mit sich führen kann. Muss er ein Maschinenelement verstellen, dann steckt er dieses tragbare Panel 17 in eine im Bereich dieses Maschinenelementes vorgesehene Schnittstelle und kann dann über das Panel 17 in der beschriebenen Weise die Einstellungen vornehmen. Auch auf diese Weise lässt sich das tragbare Gerät 17 durch Einstecken in die Schnittstelle positionieren bzw. dessen Position in Bezug zu den einzustellenden Maschinenelementen erkennen. Diese Schnittstelle ist ebenfalls drahtlos möglich, beispielsweise über eine Infrarot- oder Bluetooth-Verbindung. Die Positionserkennung könnte auch bei dem tragbaren Gerät 17 über berührungslos arbeitende Sensoren oder RFID mit Transponder erfolgen.

Das Panel 17 kann entweder drahtlos oder drahtgebunden an die Maschinensteuerung angeschlossen werden.

## Patentansprüche

1. Kehlmaschine mit verstellbaren Maschinenelementen (6 bis 11, 14, 15), wie Bearbeitungsspindeln, Andrückelemente, Anschläge oder dergleichen, die längs einer Transportbahn (2) angeordnet sind, die sich durch die Kehlmaschine erstreckt und auf der Werkstücke durch die Kehlmaschine transportiert werden, und mit wenigstens einem Einstellpanel (17), an dem Positionseinstelldaten anzeigbar sind und das an unterschiedlichen Stellen positionierbar ist,
**dadurch gekennzeichnet, dass** das Einstellpanel (17) an unterschiedliche Positionen der zu verstellenden Maschinenelemente (6 bis 11, 14, 15) zu bringen ist, wobei die jeweilige Position des Einstellpanels (17) an der Maschine über eine Positionserkennungseinrichtung ermittelt wird, und dass das Einstellpanel (17) automatisch nur diejenigen Positionseinstelldaten derjenigen Maschinenelemente (6 bis 11, 14, 15) anzeigt, die dieser jeweiligen Position des Einstellpanels (17) zugeordnet sind.

2. Kehlmaschine nach Anspruch 1,
**dadurch gekennzeichnet, dass** das Einstellpanel (17) in Transportrichtung (3) der Werkstücke (1) verfahrbar ist.

3. Kehlmaschine nach Anspruch 1,
**dadurch gekennzeichnet, dass** das Einstellpanel (17) portabel und an der jeweiligen Position einhängbar ist.

4. Kehlmaschine nach Anspruch 3,
**dadurch gekennzeichnet, dass** das Einstellpanel (17) an Schnittstellen, die sich an den entsprechenden Positionen der Maschinenelemente (6 bis 11, 14) befinden, einsteckbar ist.

5. Kehlmaschine nach Anspruch 3,
**dadurch gekennzeichnet, dass** das Einstellpanel (17) drahtlos mit an den entsprechenden Positionen der Maschinenelemente (6 bis 11, 14) befindlichen Schnittstellen kommuniziert.

6. Kehlmaschine nach einem der Ansprüche 1 bis 5,
**dadurch gekennzeichnet, dass** das Einstellpanel (17) mit einem Bildschirm, vorzugsweise einem Touchscreen, versehen ist.

7. Kehlmaschine nach Anspruch 6,
**dadurch gekennzeichnet, dass** zur Positionserkennung des Einstellpanels (17) Sensoren, wie induktive Näherungsschalter, vorgesehen sind.

8. Kehlmaschine nach Anspruch 7,
**dadurch gekennzeichnet, dass** zur Positionserkennung des Einstellpanels (17) mechanische Endschalter und Schaltnocken vorgesehen sind.

9. Kehlmaschine nach Anspruch 7,
**dadurch gekennzeichnet, dass** zur Positionserkennung des Einstellpanels (17) lineare Wegmesssysteme vorgesehen sind.

10. Kehlmaschine nach einem der Ansprüche 1 bis 9,
**dadurch gekennzeichnet, dass** das Einstellpanel (17) innerhalb einer Maschinenabdeckung (12) verfahrbar ist, vorteilhaft durch eine Öffnung der Maschinenabdeckung (12) nach außen.

11. Kehlmaschine nach einem der Ansprüche 1 bis 10,
**dadurch gekennzeichnet, dass** das Einstellpanel (17) mit wenigstens einer Kamera, wie einer Web-Cam, versehen ist bzw. wenigstens einen Anschluss für die Kamera aufweist.

12. Kehlmaschine nach einem der Ansprüche 1 bis 11,
**dadurch gekennzeichnet, dass** das Einstellpanel (17) an eine Maschinensteuerung angeschlossen ist.

13. Kehlmaschine nach einem der Ansprüche 1 bis 12,
**dadurch gekennzeichnet, dass** das Einstellpanel (17) mit zumindest einem Teil der Maschinenelemente (6 bis 11, 14, 15) signalverbunden ist.

14. Kehlmaschine nach Anspruch 12 oder 13,
**dadurch gekennzeichnet, dass** über das Einstellpanel (17) die Maschinenelemente (6 bis 11, 14, 15) einstellbar sind.

15. Kehlmaschine nach einem der Ansprüche 1 bis 14,
**dadurch gekennzeichnet, dass** das Einstellpanel (17) mit Einstellelementen versehen ist, mit denen die jeweiligen Maschinenelemente (6 bis 11, 14, 15) nach Maßgabe der angezeigten Einstellwerte einstellbar sind.

16. Kehlmaschine, insbesondere nach einem der Ansprüche 1 bis 15,
**dadurch gekennzeichnet, dass** das Einstellpanel (17) anhand der über seine Maschinensteuerung ermittelten erforderlichen Verstellungen selbsttätig und automatisch positionierbar ist.

17. Kehlmaschine nach einem der Ansprüche 1 bis 16,
**dadurch gekennzeichnet, dass** das Einstellpanel (17) auf eine positionsunabhängige Anzeige von Einstelldaten umschaltbar ist.

## Claims

1. Moulder machine with adjustable machine elements (6 to 11, 14, 15) such as processing spindles, press-on elements, stops or suchlike, which are arranged along a conveyor pathway (2) which extends through the moulder machine and on which workpieces are conveyed through the moulder machine, and with at least one adjusting panel (17) on which position adjusting data can be displayed and which can positioned at different points,
**characterised in that** the adjusting panel (17) can be brought to different positions of the machine elements (6 to 11, 14, 15) to be adjusted, wherein the respective position of the adjusting panel (17) on the machine is determined by means of a position detection device and **in that** the adjusting panel (17) automatically only displays the position adjusting data of those machine elements (6 to 11, 14, 15) which are assigned to this respective position of the adjusting panel (17).

2. Moulder machine according to claim 1
**characterised in that** the adjusting panel (17) is displaceable in the conveying direction (3) of the workpieces (1).

3. Moulder machine according to claim 1
**characterised in that** the adjusting panel (17) is portable and can be suspended at the respective position.

4. Moulder machine according to claim 3
**characterised in that** the adjusting panel (17) can be plugged in at interfaces which are located at the respective positions of the machine elements (6 to 11, 14) .

5. Moulder machine according to claim 3
**characterised in that** the adjusting panel (17) communicates wirelessly with interfaces located at the respective positions of the machine elements (6 to 11, 14) .

6. Moulder machine according to any one of claims 1 to 5
**characterised in that** the adjusting panel (17) is provided with a screen, preferably a touch screen.

7. Moulder machine according to claim 6
**characterised in that** for the position detection of the adjusting panel (17) sensors, such as inductive proximity switches, are provided.

8. Moulder machine according to claim 7
**characterised in that** for the position detection of the adjusting panel (16) mechanical limit switches and switching cams are provided.

9. Moulder machine according to claim 7
**characterised in that** for the position detection of the adjusting panel (17) linear distance measuring systems are provided.

10. Moulder machine according to any one of claims 1 to 9
**characterised in that** the adjusting panel (17) is displaceable within a machine cover (12) preferably outwards through an opening in the machine cover (12).

11. Moulder machine according to any one of claims 1 to 10 **characterised in that** the adjusting panel (17) is provided with at least one camera, such as a web cam, or has at least one connection for the camera.

12. Moulder machine according to any one of claims 1 to 11 **characterised in that** the adjusting panel (17) is connected to a machine controller.

13. Moulder machine according to any one of claims 1 to 12 **characterised in that** the adjusting panel (17) is signal-connected to at least one part of the machine elements (6 to 11, 14, 15).

14. Moulder machine according to claim 12 or 13 **characterised in that** the machine elements (6 to 11, 14, 15) can be adjusted by way of the adjusting panel (17) .

15. Moulder machine according to any one of claims 1 to 14 **characterised in that** the adjusting panel (17) is provided with adjusting elements with which the respective machine elements (6 to 11, 14, 15) can be adjusted as a function of the displayed adjusting values.

16. Moulder machine, in particular according to any one of claims 1 to 15 **characterised in that** the adjusting panel (17)is self-acting and automatically positionable by way of the required adjustments determined via its machine controller.

17. Moulder machine according to any one of claims 1 to 16 **characterised in that** the adjusting panel (17) can be switched to display adjusting data independent of position.

## Revendications

1. Machine à moulurer avec des éléments de machine réglables (6 à 11, 14,15), comme des broches d'usinage, des éléments de pression, des butées ou éléments analogues, qui sont disposés le long d'une voie de transport (2), qui s'étendent à travers la machine à moulurer et sont transportés sur des pièces usinées à travers la machine à moulurer et qui peuvent être affichés sur les données de réglage de position avec au moins un panneau de réglage (17) et peuvent être positionnés à différents emplacements,
**caractérisée en ce que** le panneau de réglage (17) peut être placé à des positions différentes des éléments de machine à régler (6 à 11,14,15), la position respective du panneau de réglage (17) sur la machine étant déterminé par un dispositif d'identification de position et **en ce que** le panneau de réglage (17) n'affiche automatiquement que les données de réglage de position des éléments de machine (6 à 11,14,15) qui sont attribués à cette position respective du panneau de réglage (17).

2. Machine à moulurer selon la revendication 1, **caractérisée en ce que** le panneau de réglage (17) peut être déplacé dans la direction de transport (3) des pièces usinées (1).

3. Machine à moulurer selon la revendication 1, **caractérisée en ce que** le panneau de réglage (17) est portatif et peut être suspendu à la position respective.

4. Machine à moulurer selon la revendication 3, **caractérisée en ce que** le panneau de réglage (17) peut être connecté à des interfaces qui se trouvent aux positions correspondantes des éléments de machine (6 à 11, 14).

5. Machine à moulurer selon la revendication 3, **caractérisée en ce que** le panneau de réglage (17) communique sans fil avec des interfaces se trouvant aux positions correspondantes des éléments de machine (6 à 11,14).

6. Machine à moulurer selon l'une quelconque des revendications 1 à 5, **caractérisée en ce que** le panneau de réglage (17) est doté d'un écran, de préférence d'un écran tactile.

7. Machine à moulurer selon la revendication 6, **caractérisée en ce que** des capteurs, comme des détecteurs de proximité inductifs, sont prévus pour l'identification de position du panneau de réglage (17).

8. Machine à moulurer selon la revendication 7, **caractérisée en ce que** des détecteurs de fin de course mécaniques et des cames de commutation sont prévus pour l'identification de position du panneau de réglage (17).

9. Machine à moulurer selon la revendication 7, **caractérisée en ce que** des systèmes de mesure de course linéaires sont prévus pour l'identification de position du panneau de réglage (17).

10. Machine à moulurer selon l'une quelconque des revendications 1 à 9, **caractérisée en ce que** le panneau de réglage (17) peut être déplacé à l'intérieur d'un capot de machine (12), de façon avantageuse vers l'extérieur à travers une ouverture du capot de machine (12).

11. Machine à moulurer selon 'une quelconque des revendications 1 à 10, **caractérisée en ce que** le panneau de réglage (17) est doté d'au moins une caméra, comme une cybercaméra ou comporte au moins une connexion pour la caméra.

12. Machine à moulurer selon l'une quelconque des revendications 1 à 11, **caractérisée en ce que** le panneau de réglage (17) est connecté à une commande de machine.

13. Machine à moulurer selon l'une quelconque des revendications 1 à 12, **caractérisée en ce que** le panneau de réglage (17) est relié par signaux à au moins une partie des éléments de la machine (6 à 11,14,15).

14. Machine à moulurer selon la revendication 12 ou 13, **caractérisée en ce que** les éléments de machine (6 à 11,14,15) peuvent être réglés par le panneau de réglage (17).

15. Machine à moulurer selon l'une quelconque des revendications 1 à 14, **caractérisée en ce que** le panneau de réglage (17) est doté d'éléments de réglage avec lesquels les éléments de machine respectifs (6 à 11,14,15) peuvent être réglés en fonction des valeurs de réglage affichées.

16. Machine à moulurer, en particulier selon l'une quelconque des revendications 1 à 15, **caractérisée en ce que** le panneau de réglage (17) peut être positionné indépendamment et automatiquement à l'aide des réglages nécessaires déterminés par sa commande de machine.

17. Machine à moulurer selon l'une quelconque des revendications 1 à 16, **caractérisée en ce que** le panneau de de réglage (17) peut être commuté sur un affichage des données de réglage indépendamment de la position.
